# EUROPÄISCHE PATENTANMELDUNG

(11) **EP 1 736 684 A1**
(43) Veröffentlichungstag der Anmeldung: **27.12.2006**
(21) Anmeldenummer: 06009707.8
(22) Anmeldetag: 11.05.2006
(51) Int. Cl.: F16F 9/348, B21D 26/14

(54) **Schwingungsdämpfer**

(30) Priorität: 22.06.2005 DE 102005028850
(71) Anmelder: ZF FRIEDRICHSHAFEN AG, 88046 Friedrichshafen (DE)
(72) Erfinder: Rölleke, Hartmut, 57635 Kircheib (DE)

(57) **Zusammenfassung**

Schwingungsdämpfer, umfassend einen Dämpfventilkörper mit mindestens einer Durchgangsöffnung (16), die zumindest teilweise von mindestens einer Ventilscheibe (7) abgedeckt wird, wobei zwischen einem Befestigungsbolzen (8) mit einem ringförmigen Befestigungsmittel (2) ein Formschluss vorhanden ist, der durch eine Deformation des Befestigungsmittel (2) erreicht wird, wobei auf das Befestigungsmittel (2) eine radial wirkende Magnetkraft (FM) ausgeübt wird, die die Deformation des Befestigungsmittels (2) bewirkt.

## Beschreibung

Die Erfindung bezieht sich auf einen Schwingungsdämpfer, umfassend einen Dämpfventilkörper mit mindestens einer Durchgangsöffnung, die zumindest teilweise von mindestens einer Ventilscheibe abgedeckt wird, wobei zwischen einem Befestigungsbolzen mit einem ringförmigen Befestigungsmittel ein Formschluss vorhanden ist, der durch eine Deformation des Befestigungsmittel erreicht wird.

In der Standardbauweise umfasst ein Schwingungsdämpfer in Zweirohrbauart eine axial bewegliche Kolbenstange, an der ein Kolben zur Dämpfung befestigt wird, ein Dämpfungsventil im Boden eines Zylinderrohres, wobei der Dämpfungsventilkörper mit Durchgangsöffnungen versehen ist, die zum Ausgleich des Volumens der eintauchenden Kolbenstange das Dämpfungsmittel vom Arbeitszylinder in einen ringförmig um den Arbeitszylinder angeordneten Ausgleichsraum gelangen lässt.

Es sind bereits Schwingungsdämpfer bekannt (z.b. DE 31 00 886 C2, Figur 15) bei denen ein Bodenventil vorgesehen ist, das einen kreisringförmigen Dämpfventilkörper aufweist, der beidseitig mit Ventilscheiben versehen ist. In einer zentralen Durchgangsöffnung ist eine einteilige Nietverbindung ausgeführt, die die Ventilscheiben und eine Vorspannfeder zum Dämpfventilkörper fixiert. Aufgrund der Nietverbindung am Bodenventil treten schwankende Vorspannkräfte an den Ventilscheiben auf, die zu einer von der angestrebten Dämpfkraftkennlinie abweichenden Einstellung führen können. Darüber hinaus ist von Nachteil, dass das montierte Bodenventil im dynamischen Betrieb des Schwingungsdämpfers einer wechselseitigen Belastung unterliegt, so dass ein Setzverhalten der Nietverbindung auftreten kann und somit kann auch ein Abfallen der Vorspannkräfte erfolgen. Diese Ursachen liegen unter anderem in dem Kaltverformungsprozess des Nietvorganges. Darüber hinaus ist nachteilig, dass eine Wiederverwendung der gesamten Bodenventileinheit durch die Nietung nicht mehr möglich ist.

Des weiteren sind Schwingungsdämpfer bekannt (DE 44 04 834 C2), bei denen ein Bodenventil vorgesehen ist, dessen Hülsenkörper an seiner Unterseite Scheiben aufweist, die über einen Stützring in Verbindung mit einer Verschweißung gehalten werden. Durch eine axiale Verschiebung des Stützringes zum Hülsenkörper kann die Vorspannung der Scheiben eingestellt werden. Diese Konstruktion lässt sich jedoch nur bei Bodenventilen einsetzen, deren Hülsenkörper aus einem mit dem Stützring verschweißbaren Werkstoff besteht. Des weiteren ist der Nachteil darin zu sehen, dass die Scheiben und der Hülsenkörper während des Schweißvorganges Schweißspritzern ausgesetzt sind, die unter Umständen die Funktion des Bodenventils beeinträchtigen könnten. Aus diesem Grunde ist es unbedingt notwendig, das Bodenventil beim Schweißvorgang gegen Schweißspritzer zu schützen.

Aufgabe der vorliegenden Erfindung ist es, ein Verbindungsmittel für die Bodenventileinheit zu schaffen, welches einerseits großserientauglich ist, andererseits enge Toleranzen bei der Dämpfkraftlinie erfüllt und welches nicht nur leicht herstellbar, sondern bei Bedarf auch wieder lösbar ist.

Diese Aufgabe wird erfindungsgemäß dadurch gelöst, dass auf das Befestigungsmittel eine radial wirkende Magnetkraft (FM) ausgeübt wird, die die gezielte Deformation des Befestigungsmittels bewirkt.

Vorteilhaft ist bei dieser Ausführungsform, dass bei der Montage des Bodenventils alle Bauteile zusammengefügt werden, wobei als letztes Bauteil das Befestigungsmittel aufgebracht wird, die Bauteile mit einer axial definierten Kraft vorgespannt werden und anschließend mittels einer radial wirkenden Magnetkraft fixiert werden. Hierbei wird eine Spule über das Befestigungsmittel gefügt, wobei anschließend ein elektromagnetischer Impuls freigesetzt wird, der das Material des Befestigungsmittels einengt und somit die Fixierung gewährleistet.

Diese Technologie zeichnet sich dadurch aus, dass hohe elektromagnetische Feldstärken für kurze Zeit erzeugt werden und dabei beachtliche mechanische Kräfte auf die zu verformenden Bauteile aufgebracht werden können. Die Kraftanleitung wird durch eine Spule bewirkt, welche über dem Befestigungsmittel angebracht ist, dabei wirkt das schnell ansteigende magnetische Feld auf das umschlossene Befestigungsmittel und erzeugt eine radiale Verformung dieses Befestigungsmittels. Es entsteht eine dauerhafte und feste Verbindung, die bei Bedarf z.b. bei Wiederverwendung des Bodenventils maschinell, jedoch beschädigungsfrei gelöst werden kann.

Nach einem weiteren wesentlichen Merkmal ist vorgesehen, dass das Befestigungsmittel eine Stützfläche für mindestens eine Feder aufweist oder dass das Befestigungsmittel eine Stützfläche für eine Schraubendruckfeder aufweist.

Mit Vorteil ist hierbei, dass die mindestens eine Ventilscheibe von der Schraubendruckfeder vorgespannt wird.

Eine weitere vorteilhafte Ausführungsform sieht vor, dass der Befestigungsbolzen eine Stützfläche für mindestens eine Federscheibe aufweist.

Zur einwandfreien Fixierung der Bauteile ist vorgesehen, dass die Magnetkraft durch eine Magnetspule erzeugt wird.

Eine fertigungstechnisch einfache und in der Großserie reproduzierbare Verbindung ist vorgesehen, indem vor Aufbringen der Magnetkraft die einzelnen Bauteile des Dämpfungsventils axial vorgespannt werden.

Bevorzugte Ausführungsbeispiele der Erfindung sind in den Figuren schematisch dargestellt.

Es zeigt:
Figur 1 einen prinzipiellen Aufbau eines Schwingungsdämpfers gemäß dem Stand der Technik
Figur 2 ein Bodenventil eines Schwingungsdämpfers als Einzelteil.

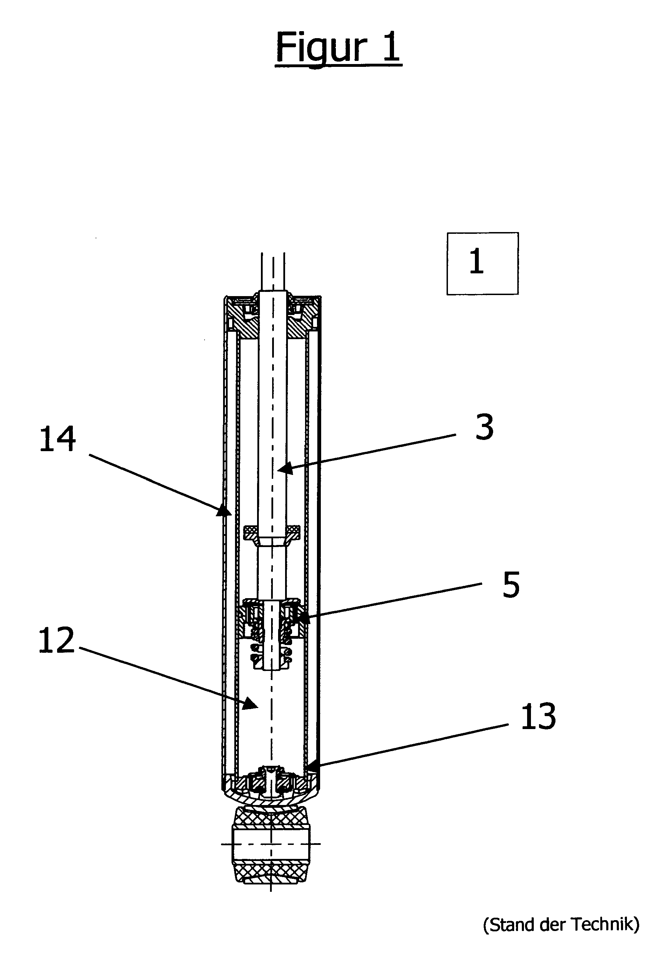

Die Figur 1 zeigt einen an sich aus dem Stand der Technik bekannten Schwingungsdämpfer 1, der eine Kolbenstange 3 mit einem Kolben 5 darstellt. Der Kolben 5 ist innerhalb des Arbeitszylinders 12 axial verschiebbar angeordnet. Im Endbereich des Arbeitszylinders 12 ist das Bodenventil 13 angeordnet, welches das Dämpfungsmittel vom Arbeitszylinder 12 in den Ausgleichsraum 14 gelangen lässt.

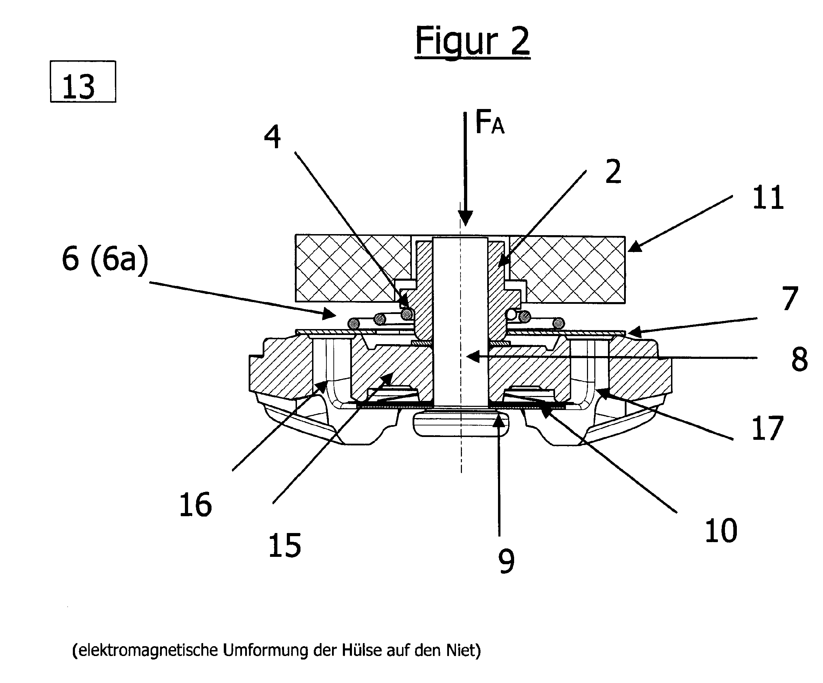

Aus der Figur 2 ist ein Bodenventil 13 dargestellt, wie es üblicherweise in einem Schwingungsdämpfer eingesetzt wird. Der Ventilkörper 15 verfügt über Durchlasskanäle 16 und 17, die auf Teilkreisen mit unterschiedlichen Durchmessern angeordnet sind. Die Austrittsenden der Durchlasskanäle sind jeweils mit mindestens einer Ventilscheibe 7, 10 bestückt. Auf einer Oberseite des Ventilkörpers 15 ist die Ventilscheibe 7 in Verbindung mit einer kegeligen Schraubendruckfeder 6a als ein einfaches Rückschlagventil ausgeführt. Die Schraubendruckfeder 6a stützt sich an einer Stützfläche 4 des Befestigungsmittels 2 ab. Der Befestigungsbolzen 8 durchgreift den Ventilkörper 15 in einer Durchgangsöffnung. An der Unterseite des Ventilkörpers 15 ist ein Ventilscheibenpaket auf dem Schaft des Befestigungsbolzens 8 aufgefädelt. Diese Federscheiben 10 stützen sich an der Stützfläche 9 des Befestigungsbolzens 8 ab.

Bei der Montage dieser Baueinheit wird zunächst auf dem Befestigungsbolzen 8 die Federscheiben 10 aufgefädelt, anschließend wird der Befestigungsbolzen 8 durch den Ventilkörper 15 hindurchgeführt, wobei auf der entgegengesetzten Seite im Anschluss hieran mindestens eine Ventilscheibe 7 sowie die Schraubendruckfeder 6a aufgefädelt wird, als letztes dann wird das Befestigungsmittel 2 in Form einer Hülse auf den Befestigungsbolzen 8 geschoben, nach Aufbringen einer axialen Kraft FA auf das Befestigungsmittel 2 wird eine entsprechende Vorspannung geschaffen, so dass anschließend das Befestigungsmittel 2 von einer Magnetspule 11 eingehüllt wird. Das Magnetfeld der Magnetspule 11 erzeugt eine radial nach innen gerichtete Magnetkraft FM, die so groß ist, dass eine gezielte Deformation des gesamten Befestigungsmittels 2 bewirkt wird, so dass eine Formschlussverbindung zwischen dem Befestigungsmittel 2 und dem Befestigungsbolzen 8 erfolgt.

### Bezugszeichenliste

- 1 -: Schwingungsdämpfer
- 2 -: Befestigungsmittel
- 3 -: Kolbenstange
- 4 -: Stützfläche
- 5 -: Kolben
- 6 -: Feder
- 6a -: Schraubendruckfeder
- 7 -: Ventilscheibe
- 8 -: Befestigungsbolzen
- 9 -: Stützfläche
- 10 -: Federscheibe
- 11 -: Magnetspule
- 12 -: Arbeitszylinder
- 13 -: Bodenventil
- 14 -: Ausgleichsraum
- 15 -: Ventilkörper
- 16 -: Durchlasskanal
- 17 -: Durchlasskanal

## Patentansprüche

1. Schwingungsdämpfer, umfassend einen Dämpfventilkörper mit mindestens einer Durchgangsöffnung, die zumindest teilweise von mindestens einer Ventilscheibe abgedeckt wird, wobei zwischen einem Befestigungsbolzen mit einem ringförmigen Befestigungsmittel ein Formschluss vorhanden ist, der durch eine Deformation des Befestigungsmittel erreicht wird,
**dadurch gekennzeichnet,**
**dass** auf das Befestigungsmittel (2) eine radial wirkende Magnetkraft (FM) ausgeübt wird, die die Deformation des Befestigungsmittels (2) bewirkt.

2. Schwingungsdämpfer nach Anspruch 1,
**dadurch gekennzeichnet,**
**dass** das Befestigungsmittel (2) eine Stützfläche (4) für mindestens eine Feder (6) aufweist.

3. Schwingungsdämpfer nach Anspruch 1,
**dadurch gekennzeichnet,**
**dass** das Befestigungsmittel (2) eine Stützfläche (6) für eine Schraubendruckfeder (6a) aufweist.

4. Schwingungsdämpfer nach Anspruch 3,
**dadurch gekennzeichnet,**
**dass** die mindestens eine Ventilscheibe (7) von der Schraubendruckfeder (6a) vorgespannt wird.

5. Schwingungsdämpfer nach Anspruch 1,
**dadurch gekennzeichnet,**
**dass** der Befestigungsbolzen (8) eine Stützfläche (9) für mindestens eine Federscheibe (10) aufweist.

6. Schwingungsdämpfer nach Anspruch 1,
**dadurch gekennzeichnet,**
**dass** die Magnetkraft durch eine Magnetspule (11) erzeugt wird.

7. Schwingungsdämpfer nach Anspruch 1,
**dadurch gekennzeichnet,**
**dass** vor Aufbringen der Magnetkraft die einzelnen Bauteile des Dämpfungsventils axial vorgespannt werden.
